Europäisches Patentamt

European Patent Office

Office européen des brevets

(11) Publication number: **0 225 713**
**A1**

# (12) EUROPEAN PATENT APPLICATION

(21) Application number: 86308328.3

(22) Date of filing: 27.10.86

(51) Int. Cl.⁴: **H01T 13/40** , G01K 7/04

(30) Priority: 25.11.85 US 801582

(43) Date of publication of application:
16.06.87 Bulletin 87/25

(84) Designated Contracting States:
BE DE FR GB

(71) Applicant: **GENERAL MOTORS CORPORATION**
**General Motors Building 3044 West Grand**
**Boulevard**
**Detroit Michigan 48202(US)**

(72) Inventor: **Van Uum, Donald R.**
**2072 Hardwood Circle**
**Davison Michigan 48423(US)**
Inventor: **Hegwood, Jule L.**
**7188 Parkwood Drive**
**Fenton Michigan 48430(US)**

(74) Representative: **Haines, Arthur Donald et al**
**Patent Section (F6) Vauxhall Motors Limited**
**P.O. Box 3 Kimpton Road**
**Luton, Beds. LU2 0SY(GB)**

(54) **Thermocouple spark plug and method of making thereof.**

(57) Method of making a spark plug comprising:
forming a green ceramic core (48) under the size of
the insulator (4) of the finished plug (2); securing a
thermocouple (30), with appropriate electrical leads -
(36,38), to the surface (50) of the core (48); forming
a green ceramic shell (52) over the core (48) and
thermocouple (30); machining the shell (52) to the
desired finished shape in such a manner that the
thermocouple (30) remains buried in the green ce-
ramic shell (52); and finally firing the green ceramic
core (48) and shell (52). The thermocouple (30) and
leads (36,38) will preferably comprise Pt and Pt-Rh
ink painted onto the surface (50) of the core (48).

Fig. 1

Fig. 8

# THERMOCOUPLE SPARK PLUG AND METHOD OF MAKING THEREOF

This application relates to an engine spark plug having a thermocouple embedded in its firing tip and a method of making same.

## Background of the Invention

A spark plug for an internal combustion engine essentially comprises an insulator, a centre electrode extending longitudinally through a bore in the centre of the insulator, a metal collar securely engaging the insulator and adapted to screw into the engine, and a ground electrode connected to the collar for electrical grounding to the engine. The insulator comprises a shank portion which projects outboard of the engine and a nose portion which projects into a combustion chamber of the engine and positions the centre electrode into close proximity to the ground electrode for establishing a spark gap of the plug.

Spark plug insulators are manufactured by initially compacting ceramic powder (e.g., alumina) and a binder (e.g., wax) into a self-sustaining blank having an outer contour generally conforming to that of the final product. This initial compaction is performed by the so-called "isostatic moulding process" wherein an elastomeric mould is filled with the alumina and binder, placed in a pressure vessel and subjected to fluid pressure sufficient to bind the alumina-binder mass together. A particular adaptation of the isostatic moulding process as applied to spark plugs is disclosed in US-A-3,034,l9l (Schaefer). The thusly formed, but unfired, compact (often called "green" ceramic) is then machined (i.e., typically ground) to a shape which will shrink during firing to the desired shape and dimensions of the finished insulator. The machined green ceramic is then fired (e.g., at about l482°C) for about 24 hours in an oxidizing environment to harden the mass.

It is well known to provide a thermocouple in the nose of the insulator to sense the temperature at the tip of the nose under various engine operating conditions to determine if the plug is properly matched to the engine. In this regard, spark plugs are designed to operate within specific heat ranges and in this way are matched to particular engines. The heat range of a plug must be such as to avoid carbon fouling (i.e., if the insulator nose is too cold) and pre-ignition (i.e., if the insulator nose is too hot). In order to design spark plugs with specific heat ranges, it is essential that means be provided to accurately measure the temperature at the tip of the nose of the spark plug under various engine operating conditions. Moreover, as computerized engine controls become more sophisticated it may be desirable to feed ignition temperature data into the computer to further refine control of the engine.

Accordingly, there exists a need for a responsive, reliable means for accurately measuring the temperature at the tip of the insulator nose of a spark plug while it is in use in an engine under various speed and load conditions. Heretofore, spark plug insulator noses have been drilled and conventional thermocouples implanted therein. Insulated lead wires extend from the thusly implanted thermocouple up through the centre bore of the insulator along with the centre electrode of the plug. One such design is disclosed in US-A 3,940,987 (Green et al).

It has been found that thermocouples so implanted in the insulator and electrically connected to the outside of the engine introduce a sufficiently large mass of foreign matter into nose of the insulator that the thermal characteristics thereof (e.g., the heat range) no longer represent the thermal characteristics of the plug being studied (i.e., the thermal characteristics of an identical plug made without a thermocouple). Moreover, thermocouples so implanted are often exposed, at least to some extent, to the combustion process in the combustion chamber of the engine which tends to reduce their effectiveness and shorten their useful lives. Finally thermocouples so implanted are typically located relatively deep in the ceramic material at the nose so that they cannot instantaneously, accurately sense the temperature at the surface of the tip of the nose. Hence the usefulness of such prior devices as an accurate tool for engine and spark plug design as well as engine control is limited.

It is an object of the present invention to provide an improved method of making a spark plug insulator including a low mass thermocouple embedded just beneath the surface of the ceramic insulator at the tip of the nose thereof at the time the insulator is fired. It is a further object of the present invention to provide an improved spark plug having a low mass thermocouple completely and shallowly submerged beneath the surface of the ceramic at the tip of the nose of the insulator so as to have little or no substantial affect on the thermal characteristics of the nose of the insulator.

These and other objects and advantages of the present invention will become more readily apparent from the detailed description thereof which follows.

## Brief Description of the Invention

The present invention comprehends a method of making a thermocouple-bearing spark plug, and the plug so made, involving firing a low mass thermocouple into the nose of the insulator at the time the insulator is fired, which thermocouple is located slightly (i.e., less than I mm) beneath the surface of the ceramic at substantially the very tip of the nose. The thermocouple so produced is not only protected from the combustion environment in the engine by a thin ceramic layer but is so close to the surface of the tip that it will more accurately and responsively sense the temperature of the tip than thermocouples used with spark plugs heretofore. Essentially the method involves forming the ceramic insulator in layers, locating the thermocouple between the layers and then firing the insulator and thermocouple together into an integral mass. More specifically the invention comprehends a method including the steps of: forming a green ceramic core having a nose-forming portion which is slightly smaller (i.e., diameter-wise) than the nose of the finished insulator; securing a small thermocouple to the surface of the nose-forming portion adjacent its tip; providing the thermocouple with electrical leads which extend along the surface of the core to locations remote from the tip of the nose for ready access from the outside of the engine; forming a green ceramic shell over the undersized portion of the core, the thermocouple and the leads; machining (e.g., grinding) the shell to a pre-firing shape conforming essentially (i.e., including a slight shrinkage factor) to that of the finished insulator and such as to keep the thermocouple junction and leads submerged slightly below the finished surface of the nose of the insulator, while ensuring that the remote ends of the leads are exposed on the surface of the insulator for connection to appropriate circuitry responsive to temperature changes monitored by the thermocouple; and finally firing the core and shell together into an integral mass embedding the thermocouple and leads therein.

The thermocouple and electrical leads therefore will preferably be formed from dissimilar, oxidation-resistant metal foils which overlap one another at about the tip of the nose-forming portion. While preformed foils of the dissimilar metals may be adhesively bonded to surface of the core, it is most preferred to deposit the metals in the form of a paint or ink comprising particles of the metal in an appropriate vehicle. The particles are later sintered together to form the respective foils in situ at the time the insulator is fired. The dissimilar metals used must be able to withstand the ceramic firing environment and accordingly must be resistant to oxidation at firing temperatures around I482°C.

Particularly effective metals for use in this invention comprise a first metal of platinum and a second metal which is a platinum-rhodium alloy. These materials are well-known for forming thermocouples and considerable data is available in the literature concerning thermocouples made therefrom. The Pt-Rh alloys typically used in thermocouple applications comprise about 10% to about 13% rhodium and these have proved very effective in this application. Other Pt alloys of course may also be used as well as any other metal couple which is thermoelectrically operative at engine operating temperatures and capable of withstanding the ceramic firing environment.

When preformed foils are used, they may be adhered to the surface of the core and to each other by any suitable adhesive which is driven off during the firing operation. A wax like that used to form the green ceramic should be a satisfactory adhesive for this purpose. The two foils may be pre-joined and then attached to the core as a unit or sequentially laid one atop the other on the core. However, as indicated above, the layers of dissimilar metals will preferably be formed by depositing thin films of metallic paint/ink on the core. The use of such paint/ink results in the lowest mass possible, provides considerable design flexibility in arranging and locating the thermocouple in the insulator and is easily applied with production equipment. In this latter regard, the inks may be applied by brush or most conveniently by silk screen. When metallic paint/ink is used, one layer is applied and then dried (i.e., approximately 5-10 minutes at I00°C.) before applying and drying the second layer. The core is allowed to cool between applications of the ink.

Electrical leads are applied to each of the foils or paint/ink layers and extended up along the surface of the core to a location remote from the tip of the nose-forming portion where they can ultimately be accessed from outside the engine for connection to appropriate circuitry for utilizing the output signal of the thermocouple. These leads may comprise very fine uninsulated oxidation-resistant wires having essentially the same composition as the metal foils, but will preferably comprise integral extensions of the thermocouple-forming foils themselves. In this regard, it is preferable to deposit continuous strips of the foils or paint/ink along substantially opposite sides of the core so that the ends of the strips converge and overlap at the tip of the nose-forming portion to establish the thermocouple junction.

## Detailed Description of Specific Embodiments of the invention

The invention may better be understood when considered in the light of the following detailed description of specific embodiments thereof which is given hereafter in conjunction with the accompanying drawings, in which:

Figure 1 is a partially-sectioned view of a spark plug and associated connector boot;

Figure 1a is an enlargement of the insulator nose of the spark plug shown in Figure 1;

Figure 2 is a side sectional view of a green ceramic blank prior to grinding;

Figure 3 is a side sectional view of an insulator core formed by machining the blank of Figure 2;

Figure 4 is a side sectional view of the core of Figure 3 after a thermocouple and leads have been applied thereto;

Figure 5 is a side elevational view taken in the direction 5-5 of Figure 4;

Figure 6 is a side elevational view taken in the direction 6-6 of Figure 4;

Figure 7 is a side sectional view of the core shown in Figures 4-6 after a ceramic shell has been formed thereabout;

Figure 8 is a side sectional view of the core and shell of Figure 7 after machining the shell to pre-firing dimensions;

Figure 9 is a sectional view in the direction 9-9 of Figure 8;

Figure 10 is a sectional view in the direction 10-10 of Figure 8; and

Figure 11 is a side elevational view of another embodiment of a core and thermocouple made in accordance with the present invention.

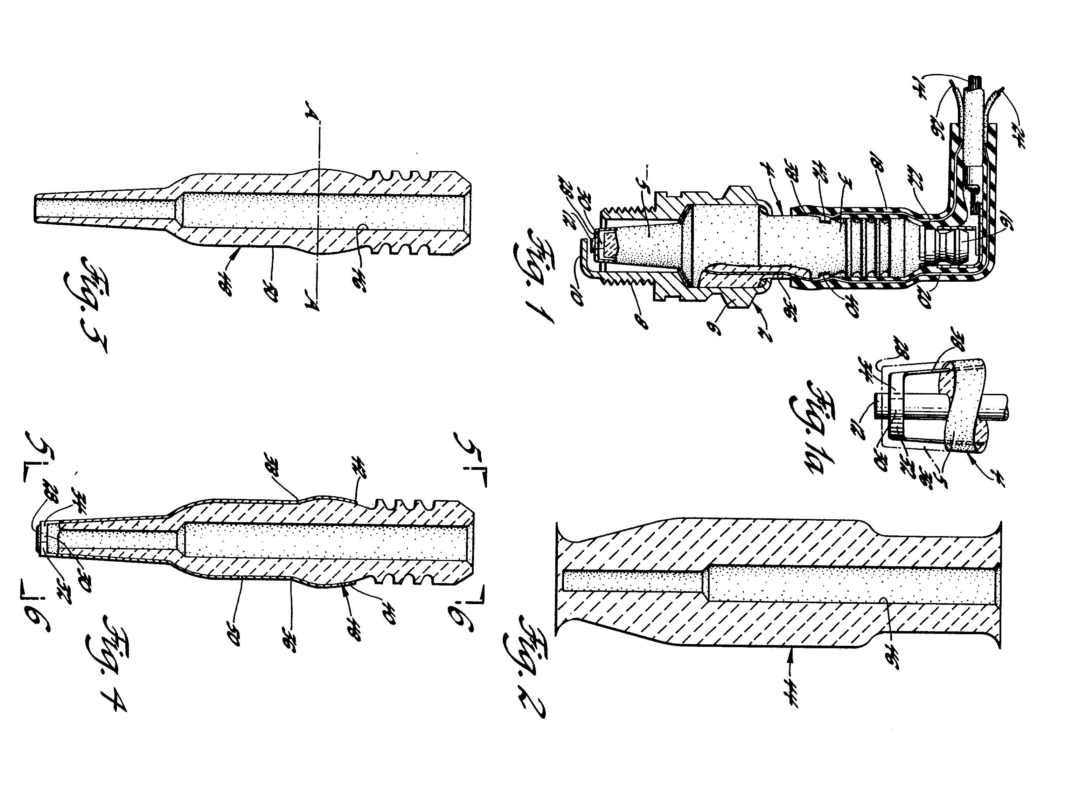

Figure 1 depicts a spark plug 2 comprising an insulator 4 secured within a collar 6 for screwing the plug into an engine block via threads 8. The insulator comprises a shank portion 3 which projects outboard of the engine block and a nose portion 5 which extends into a combustion chamber of the engine block. A ground electrode 10 is connected to the collar 6 and is thereby electrically grounded to the engine block. A centre electrode 12 passes longitudinally through a bore in the centre of the insulator 4, and is connected to a distributor wire 14 via a terminal 16 at the top of the plug 2. A rubber boot 18 slips over the shank portion 3 of the plug 2 to prevent moisture and contaminants such as road salt from reaching the connection at the terminal 16. The rubber boot 18 contains two additional electrical wires 20 and 22 embedded therein which are respectively connected to wires 24 and 26 for connection to appropriate external circuitry - (not shown).

A thermocouple 30 is embedded in the nose 5 of the insulator 4 adjacent a tip 28 thereof (as will be described in more detail hereinafter) and is connected to the ends of the wires 20 and 22 in the boot 18 via leads 36 and 38. The leads 36 and 38 are embedded in the ceramic material forming the nose 5 of the insulator 4 but exit the ceramic material just above the collar 6 and lie on the surface of the shank portion 3, as pads 40 and 42, for contact with the ends of the wires 20 and 22 when the boot 18 is positioned over the shank portion 3. More specifically, and by reference to the Figure 1a enlargement of the nose 5, the thermocouple 30 is formed by contiguously overlapping the ends of dissimilar metal foils 32 and 34 to form the thermoelectric junction. Electrical leads 36 and 38 extend from the thermocouple 30 and are also embedded in the insulator 4 at the time it is fired. The foil 32 will preferably comprise platinum and the foil 34 a platinum-rhodium alloy such as is well known in the thermocouple art. The electrical leads 36 and 38 will preferably be formed integrally with the foils 32 and 34. The thermocouple foils 32 and 34, and lead foils 36 and 38 will preferably be formed by depositing platinum/platinum-rhodium inks on the surface of a core member (to be discussed hereinafter) and the metal particles in the ink subsequently sintered at the time the ceramic material is fired.

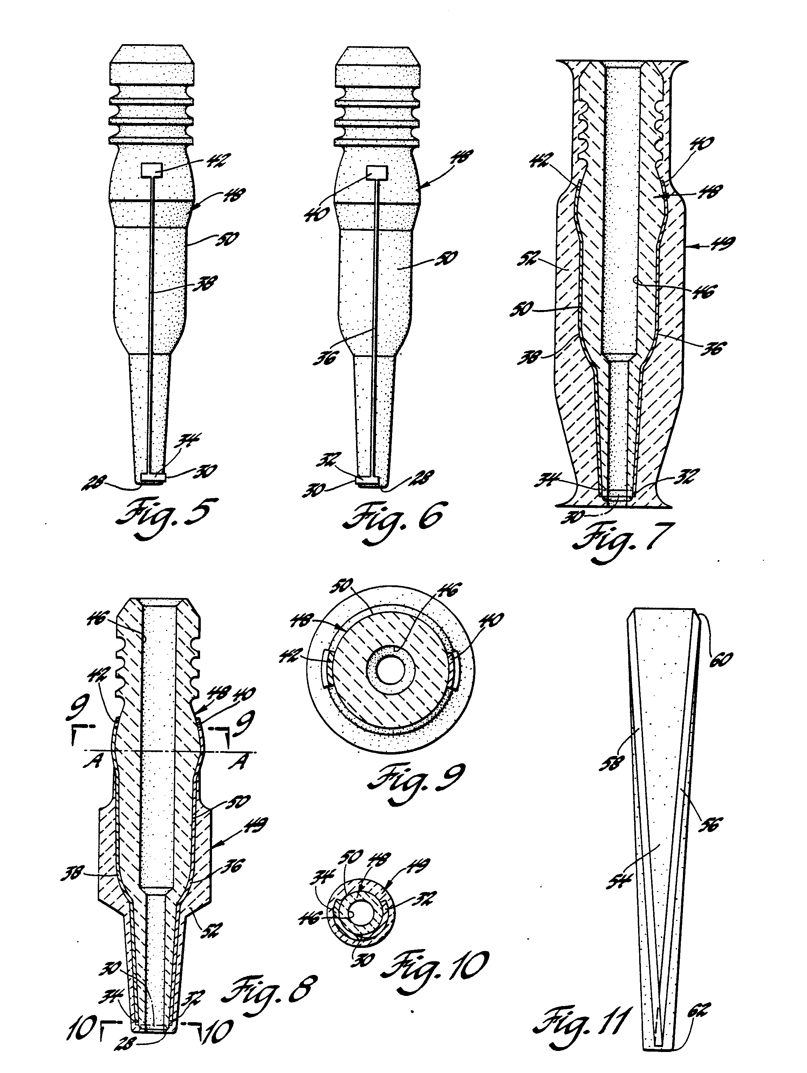

Figures 2-10 depict the stages of manufacturing the spark plug 2 in accordance with the method aspect of the present invention. Figure 2 depicts a green ceramic blank 44 after it is removed from the isostatic moulding step. The blank 44 has a general configuration like that of the finished insulator 4 and includes a centre bore 46 through which the centre electrode 12 ultimately extends. The green ceramic blank 44 is ground to the configuration shown in Figure 3 to form a core 48 upon which the thermocouple is subsequently formed and the remainder of the insulator 4 subsequently built-up. The upper or shank portion (i.e., above the line A-A) of the core 48 is ground to the normal prefiring dimensions as would be used for making a similar spark plug which was not destined to have a thermocouple embedded therein. Hence, the upper portion would be ground to slightly larger than the dimensions of the finished insulator including an allowance for the shrinkage that will occur during firing. Below the line A-A, however, the blank 44 is machined to a size which is smaller than the finished size of the insulator --that is to say, to dimensions which are diametrally less than the outside diameter of the finished insulator.

Figures 4-6 depict the core 48 after the foils 32 and 34 (i.e., forming the thermocouple 30) and the foils 36 and 38 (i.e., forming the electrical leads) have been deposited on the surface 50 thereof. As shown in Figure 4 (see also Figure l0), the foils 32 and 34 contiguously overlap adjacent the tip 28 to form the thermocouple 30. Pt/Pt-Rh inks provided by Metech, Inc. have been used effectively to make such a thermocouple and leads. More specifically, the ink is applied to a thickness of about 35 micrometres and at a width of about 400 micrometres to form the lead wires 36 and 38; as an area of about l000 micrometres by l000 micrometres to form the overlapping foils 32 and 34; and as an area of about 3000 micrometres by about 3000 micrometres to form the contact pads 40 and 42. After the platinum ink has been applied to the surface, the ink is dried by placing the core 48 in a furnace for approximately 5-l0 minutes at about l00°C. The core 48 is then allowed to cool before depositing and drying the platinum-rhodium layer in the same manner as the platinum layer was applied and dried.

Following application and drying of the Pt/Pt-Rh inks, the green ceramic core 48 is repositioned in the rubber mould used to form the blank 44 and the mould filled with additional alumina-wax particles. Thereafter, the mould is again isostatically pressed to form the blank 49 shown in Figure 7. The blank 49 includes the core 48 at the centre thereof as well as a shell 52 formed during the repressing operation. The second blank 49 has the identical configuration as the first blank 44 but now includes the thermocouple 30 and leads 36 and 38 buried therein. The second blank 49 is then ground to the approximate shape of the finished insulator 4 (see Fig. 8) allowing only such additional material as is necessary to compensate for shrinkage that will occur in the ceramic firing operation. More specifically, blank 49 is ground so as to leave a thickness of less than l mm of the shell 52 covering the thermocouple 30 at the tip 28 but so as to expose the pads 40 and 42 on the surface of the shank 3. Thereafter, the thusly ground blank 49 is heated in an oxidizing furnace for about 24 hours at approximately l593°C to fire the green ceramic material into a hard integral mass as is well known in the art. At the same time the platinum and platinum-rhodium particles are sintered together into a substantially continuous foil.

Figure ll depicts another embodiment of the present invention and shows a generally conical green ceramic core 54 having strips of platinum foil 56 and platinum-rhodium foil 58 spaced apart on the top 60 of the core but converging into contiguous overlapping contact with each other at the tip 62 thereof. In this embodiment, the core 54 would be isostatically moulded undersized in the first instance, rather than ground down from an oversized blank, and electrical contact to the external circuitry would be made at the top of the insulator via an appropriate cap. Otherwise, the core 54 would be processed essentially in the same manner as the core 48 in the prior embodiment.

While the embodiments described above involve cores which were totally overcoated with a ceramic shell followed by final grinding which exposed of the contact pads on the surface of the shank the invention is not so limited. In this regard, for example, one might prefer to mould the core with an undersized lower nose portion and an upper portion already at the pre-firing size. In that situation, the shell portion need only be remoulded about the lower portion of the core to cover the thermocouple and leads so that the pads for engaging the contacts within the rubber boot would be exposed throughout the second isostatic pressing operation and not require exhumation during the final grinding operation. Accordingly, the invention is not to be considered as being limited to the specific embodiments disclosed but rather only to the extent set forth hereafter in the claims which follow.

## Claims

l. A method of making a ceramic insulator (4) for a spark plug for use in an internal combustion engine, said insulator (4) having a shank portion - (3) adapted to project outboard of the engine with which the plug (2) is used, a nose (5) including a tip (28) adjacent a spark gap of the plug (2) and adapted to project into a combustion chamber of said engine, and a thermocouple (30) buried within said tip (28), characterised in that said method comprises the steps of: forming a green ceramic core (48) about which the remainder of said insulator (4) is to is formed, said core (48) having a nose-forming portion which is diametrally smaller than said nose (5) of the finished insulator (4); securing said thermocouple (30) to the surface - (50) of said nose-forming portion adjacent said tip - (28); extending electrical leads (36,38) between said thermocouple (30) and said shank portion (3) for connecting said thermocouple (30) to appropriate external circuitry responsive to temperature changes of said tip (28) as monitored by said thermocouple (30); forming a green ceramic shell - (52) about said nose-forming portion so as to submerge said thermocouple (30) and leads (36,38) in ceramic material; machining said shell (52) to a pre-firing shape approximating that of the finished insulator (4) and such as to keep said thermocouple (30) and leads (36,38) submerged in said ceramic material; and heating said core (48) and shell (52) sufficiently to fire said core (48) and shell (52) together into a hard integral mass and to shrink said mass to the finished size of the insulator (4) with said thermocouple (30) and leads (36,38) inextricably embedded within said nose (5).

2. A method of making a ceramic insulator (4) for a spark plug (2) according to claim l, characterised in that the thermocouple (30) and leads - (36,38) are formed by depositing a platinum strip along the length of one side of said core (48), said strip having a first end (32) about said tip (28), a second end (40) remote from said tip (28) for connecting to said appropriate external circuitry, and a segment (36) intermediate said ends (32,40) for electrically joining said ends (32,40) together; depositing a platinum-rhodium alloy strip along the length of another side of said core (48), said alloy strip having a first end (34) contiguously overlapping said first end (32) of said platinum strip for forming said thermocouple (30), a second end (42) remote from said tip for connecting to said circuitry, and a segment (38) intermediate said ends - (34,42) for electrically joining said ends (34,42) together;

3. A method of making a ceramic insulator (4) for a spark plug 2 according to claim 2, characterised in that the platinum strip (32,36,40) is formed from platinum paint, and the platinum-rhodium alloy strip is formed from platinum-rhodium alloy paint.

4. A method of making a ceramic insulator (4) for a spark plug (2) according to claim 2 or 3, characterised in that said shell (52) is machined to said pre-firing shape in such a manner as to keep said thermocouple (30) and segments (36,38) submerged in said ceramic material and to expose said second ends (40,42) on the surface (50) of the insulator (4).

5. A spark plug (2) for use in an internal combustion engine, having a ceramic insulator (4) including a nose portion (5) having a tip (25) adjacent a spark gap of the plug (2), a shank portion - (3) adapted to project outboard of the engine with which the plug (2) is used, and a thermocouple - (30), characterised in that there is a first metal foil (32) buried beneath the ceramic material of the insulator (4) at said tip (28), said metal foil (32) being resistant to oxidation at the firing temperature of said ceramic material and comprising one half of said thermocouple (30); a second metal foil (34) buried beneath said ceramic material at said tip - (28) and contiguously overlying said first foil (32), said second metal foil (34) being resistant to oxidation at the firing temperature of said ceramic material and together with said first foil (32) forming said thermocouple (30) which is inextricably embedded in and protected by said ceramic material at said tip (28); a first electrical lead having a first end contacting said first metal foil (32), a second end (40) adhering to an outer surface of said shank portion (3) for connection to appropriate circuitry responsive to temperature changes of said nose portion (5) and a segment (36) intermediate said ends and embedded in said insulator (4); and a second electrical lead having a first end contacting said second metal foil (34), a second end (42) adhering to the outer surface of said shank portion (3) for connection to said circuitry, and a segment - (38) intermediate said ends and embedded in said insulator.

6. A spark plug (2) according to claim 5, characterised in that said leads comprise foil strips which are respectively continuous extensions of said first (32) and second (34) metal foils.

7. A spark plug according to claim 5 characterised in that said foils (32,34) comprise particles of platinum and platinum-rhodium alloys respectively, sintered together at the time said insulator - (4) is fired.

*Fig. 1*

*Fig. 1a*

*Fig. 2*

*Fig. 3*

*Fig. 4*

Fig.5

Fig.6

Fig.7

Fig.8

Fig.9

Fig.10

Fig.11

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | DE-A-3 203 149 (BOSCH)<br>* Page 6, line 11 - page 8, line 29; figures 1,2 * | 1 | H 01 T 13/40<br>G 01 K 7/04 |
| X | | 5-7 | |
| A | | 2,4 | |
| | --- | | |
| D,Y | DE-A-3 034 191 (SCHAEFER)<br>* Column 2, lines 18-66; figure 1 * | 1 | |
| | --- | | |
| A | US-A-4 004 948 (SMITH)<br>* Column 1, lines 18-26; column 2, lines 20-22 * | 3 | |
| | --- | | TECHNICAL FIELDS SEARCHED (Int. Cl.4) |
| A | DE-A-3 217 951 (BOSCH) | | H 01 T |
| | --- | | |
| A | BE-A- 501 313 (MASCHERPA) | | |
| | --- | | |
| D,A | US-A-3 940 987 (GREEN) | | |
| | ----- | | |

The present search report has been drawn up for all claims

| Place of search | Date of completion of the search | Examiner |
|---|---|---|
| THE HAGUE | 02-03-1987 | BIJN E.A. |